# EUROPÄISCHE PATENTSCHRIFT

(11) **EP 4 492 185 B1**
(45) Veröffentlichungstag und Bekanntmachung des Hinweises auf die Patenterteilung: **05.11.2025**
(21) Anmeldenummer: 24185858.8
(22) Anmeldetag: 01.07.2024
(51) Int. Cl.: G05D 7/01, F16K 1/00

(54) **VENTILANORDNUNG**
VALVE ASSEMBLY
AGENCEMENT DE SOUPAPE

(30) Priorität: 14.07.2023 DE 102023204364
(43) Veröffentlichungstag der Anmeldung: 15.01.2025
(73) Patentinhaber: VOLKSWAGEN AG, 38440 Wolfsburg (DE)
(72) Erfinder: Koch, Tino, 38165 Lehre (DE)

(56) Entgegenhaltungen:
- UNKNOWN: "Fixed setting throttle check valve FPRU", 31 July 2017 (2017-07-31), Italy, pages 1 - 2, XP093220652, Retrieved from the Internet <URL:https://www.fluidpress.it/file/Home/prodotti/allegati/I010_SCHEDA.pdf> [retrieved on 20241104]
- UNKNOWN: "Needle restrictor, free reverse flow, Common cavity, Size 10", 31 January 2010 (2010-01-31), 41015 Nonantola - Modena, Italy, pages 1 - 1, XP093220640, Retrieved from the Internet <URL:https://apps.boschrexroth.com/products/compact-hydraulics/ch-catalog/pdf/040105X8500_RE18321-11.pdf> [retrieved on 20241104]

## Beschreibung

Die Erfindung betrifft eine Ventilanordnung, durch die Volumenstrom eines Fluids in einer bestimmten Weise geregelt werden soll.

Eine Ventilanordnung wird insbesondere in Kühlkreisläufen von Kraftfahrzeugen verwendet. Selbstverständlich sind andere Applikationen auch möglich.

Für einen Betrieb eines Kühlkreislaufs sind bestimmte Volumenstromkennlinien gewünscht, die durch Ventilanordnungen realisiert werden sollen. Üblicherweise werden dafür Proportionalventile verwendet, durch die ein jeweilig gewünschter Volumenstrom einstellbar bzw. regelbar ist. Derartige Proportionalventile sind jedoch teuer und technisch aufwändig. Insbesondere sind dafür Steuereinheiten bereitzustellen, durch die eine bestimmte, gewünschte Ventilstellung einstellbar sind. Diese Steuereinheiten umfassen insbesondere eine elektrische, ggf. aber auch pneumatische oder hydraulische Betätigung des Proportionalventils.

Aus der DE 38 22 789 A1 ist ein selbsttätiges Drosselventil zur Volumenstrombegrenzung bekannt. Das Ventil weist eine mit wachsendem Unterdruck degressiv fallende Charakteristik des Volumenstroms auf.

Aus der EP 2 908 013 A1 ist ein hydraulisches System zum Kippen einer auf einem Kipperfahrzeug befindlichen Kippbrücke gerichtet.

Aus der DE 38 00 715 A1 ist ein temperaturabhängiges Mengenregelventil bekannt. Dabei wird durch das Ventil bei geringen Temperaturen und bei hohen Temperaturen ein maximaler Durchströmungsquerschnitt und bei mittleren Temperaturen ein reduzierter Durchströmungsquerschnitt bereitgestellt.

Aus der DE 10 2016 101 425 A1 ist ein Mengenbegrenzungsventil bekannt. Dabei wird ein Rückschlagventil bei steigender Druckdifferenz geöffnet.

Aus Unknown: "Fixed setting throttle check valve FPRU", 31. Juli 2017, Seiten 1-2, XP093220652, Italy, ist eine Ventilanordnung bekannt.

Aus Unknown: "Needle restrictor, free reverse flow, common cavity, Size 10", 31. Januar 2010, Seiten 1-1, XP093220640, 41015 Nonantola - Modena, Italy, geht eine Ventilanordnung hervor.

Aufgabe der vorliegenden Erfindung ist es, die mit Bezug auf den Stand der Technik angeführten Probleme zumindest teilweise zu lösen. Insbesondere soll eine Ventilanordnung vorgeschlagen werden, durch die eine bestimmte Kennlinie eines Volumenstroms realisierbar ist. Die Ventilanordnung soll möglichst günstig herstellbar sein und bevorzugt keine Regelung benötigen, sondern sich selbst regeln können.

Zur Lösung dieser Aufgaben trägt eine Ventilanordnung mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Ventilanordnung vorgeschlagen, zumindest (oder ausschließlich) umfassend
- einen Zulauf und
- einen Ablauf,
- einen den Zulauf mit dem Ablauf strömungstechnisch verbindenden ersten Strömungsweg sowie
- einen den Zulauf mit dem Ablauf strömungstechnisch verbindenden zweiten Strömungsweg.
In dem ersten Strömungsweg ist ein Drosselventil und in dem zweiten Strömungsweg ein Rückschlagventil angeordnet ist. Ein Durchströmungsquerschnitt des Rückschlagventils verringert sich bei steigender Druckdifferenz zwischen einem ersten Druck im Zulauf und einem zweiten Druck im Ablauf.

Ein über die Ventilanordnung strömendes Fluid strömt über den Zulauf in die Ventilanordnung ein und über den Ablauf wieder ab. Der in die Ventilanordnung über den Zulauf einströmende Volumenstrom entspricht dabei insbesondere dem über den Ablauf aus der Ventilanordnung ausströmenden Volumenstrom.

Die Ventilanordnung weist insbesondere mindestens zwei, bevorzugt genau zwei, Strömungswege auf, die zumindest abschnittsweise oder sogar vollständig voneinander getrennt bzw. beabstandet sind. Die Strömungswege sind parallel zueinander verschaltet, so dass entlang des ersten Strömungswegs ein erster Teilvolumenstrom und entlang des zweiten Strömungswegs ein zweiter Teilvolumenstrom hin zum Ablauf strömen kann. Soweit hier auf einen konkreten Strömungskanal Bezug genommen wird, ist der von dem (mindestens einen) anderen Strömungskanal getrennte bzw. parallele Abschnitt gemeint.

In dem ersten Strömungsweg ist ein (einzelnes) Drosselventil angeordnet. Drosselventile sind grundsätzlich bekannt. Sie weisen regelmäßig eine linear oder degressiv verlaufende Kennlinie auf, bei der ein Volumenstrom mit steigender Druckdifferenz proportional oder degressiv ansteigt. Das Drosselventil ist insbesondere ungeregelt, weist also einen konstanten (kleinsten) Durchströmungsquerschnitt (senkrecht zum Verlauf des ersten Strömungswegs) auf.

In dem zweiten Strömungsweg ist ein (einzelnes) Rückschlagventil angeordnet. Das Rückschlagventil ist derart ausgeführt, dass ein Durchströmungsquerschnitt des Rückschlagventils (senkrecht zum Verlauf des zweiten Strömungswegs) sich bei steigender Druckdifferenz zwischen einem ersten Druck im Zulauf und einem zweiten Druck im Ablauf verringert. Dabei wird insbesondere der (kleinste) Durchströmungsquerschnitt des Rückschlagventils verkleinert bzw. reduziert, wenn die Druckdifferenz sich vergrößert und der (kleinste) Durchströmungsquerschnitt des Rückschlagventils vergrößert bzw. erweitert, wenn die Druckdifferenz sich (wieder) verkleinert. Insbesondere ist vorgesehen, dass die Änderung des Durchströmungsquerschnitt eingestellt bzw. geregelt wird. Die Änderung des Durchströmungsquerschnitts erfolgt insbesondere umgekehrt bzw. entgegengesetzt zur Änderung der Druckdifferenz.

Insbesondere ist eine Kennlinie eines Volumenstroms, der durch die Ventilanordnung hindurch strömt, in Abhängigkeit von der Druckdifferenz bei kleineren Volumenströmen progressiv und bei größeren Volumenströmen degressiv. Das bedeutet insbesondere, dass ausgehend von einer Druckdifferenz von null der Volumenstrom zunächst überproportional ansteigt. Bei höheren Druckdifferenzen ist die Kennlinie dann degressiv, wobei der Volumenstrom dann nur noch unterproportional ansteigt.

Insbesondere steigt der Volumenstrom mit steigender Druckdifferenz immer weiter an. Gemäß einer alternativen Ausgestaltung erreicht der Volumenstrom bei einer bestimmten Druckdifferenz ein Maximum (erster Grenzwert) und bleibt dann im Wesentlichen konstant.

Insbesondere ist die Ventilanordnung ungeregelt, so dass sich der Volumenstrom durch die Ventilanordnung (bei ansonsten konstanten Umgebungsbedingungen) ausschließlich in Abhängigkeit von der Druckdifferenz einstellt bzw. selbsttätig regelt. Es erfolgt insbesondere keine von außerhalb der Ventilanordnung aktuierte Änderung eines Durchströmungsquerschnitts der Ventile. Insbesondere regelt sich der Durchströmungsquerschnitt am Rückschlagventil selbsttätig.

Insbesondere ist das Drosselventil als eine (grundsätzlich bekannte) Blende ausgeführt, bei der sich ein über den ersten Strömungsweg strömender erster Teilvolumenstrom bei steigender Druckdifferenz einem ersten Grenzwert annähert. Eine Blende ist insbesondere ein Sonderfall einer Drossel, bei der ein Durchströmungsquerschnitt insbesondere ebenfalls konstant ist, bei der aber ein Volumenstrom bei steigender Druckdifferenz nicht beliebig ansteigt, sondern sich einem ersten Grenzwert bzw. einem Maximum (asymptotisch) annähert.

Insbesondere weist der Durchströmungsquerschnitt des Rückschlagventils ausgehend von einer geringen Druckdifferenz und bis hin zu einem zweiten Grenzwert der Druckdifferenz einen maximalen Wert und ab einem dritten Grenzwert und hin zu größeren Druckdifferenzen einen minimalen Wert auf. Insbesondere verringert sich also der Durchströmungsquerschnitt des Rückschlagventils mit steigender Druckdifferenz.

Insbesondere ist der Durchströmungsquerschnitt bei dem minimalen Wert vollständig verschlossen, so dass dann ein zweiter Teilvolumenstrom auf null abfällt.

Insbesondere weist das Rückschlagventil ein Verschlusselement auf, das mit zunehmender Druckdifferenz gegen eine Federkraft mindestens eines Federelements hin zu einem Ventilsitz des Rückschlagventils verlagerbar ist.

In einer Ausgangsstellung (erste Stellung), wenn also keine Druckdifferenz zwischen dem Zulauf und dem Ablauf vorliegt, ist das Verschlusselement insbesondere beabstandet von dem Ventilsitz angeordnet, so dass ein (maximaler) Durchströmungsquerschnitt am Rückschlagventil vorliegt.

Mit zunehmender Druckdifferenz wird das Verschlusselement, insbesondere sukzessive, hin zum Ventilsitz verlagert, so dass der Durchströmungsquerschnitt zunehmend verringert wird.

Insbesondere ist das Verschlusselement eine Klappe, die zwischen einer ersten Stellung, in der der Durchströmungsquerschnitt einen maximalen Wert aufweist, und einer zweiten Stellung, in der der Durchströmungsquerschnitt einen minimalen Wert aufweist, um einen Drehpunkt verdrehbar ist.

Alternativ ist das Verschlusselement ein Element, das zwischen einer ersten Stellung, in der der Durchströmungsquerschnitt einen maximalen Wert aufweist, und einer zweiten Stellung, in der der Durchströmungsquerschnitt einen minimalen Wert aufweist, entlang einer Strömungsrichtung eines die Ventilanordnung durchströmenden Fluids (also transversal) verlagerbar ist. Eine Verdrehung oder Rotation des Elements tritt dabei insbesondere nicht auf.

Ggf. ist auch eine Kombination einer Verdrehung und einer transversalen Verlagerung der Klappe möglich.

Insbesondere ist das Federelement eine Zugfeder oder eine Druckfeder, die als eine Spiralfeder oder als eine Torsionsfeder ausgeführt ist.

Es wird weiter ein Kühlkreislauf vorgeschlagen, zumindest umfassend eine Fluidleitung und eine Pumpe. Die Pumpe ist in der Fluidleitung angeordnet und dient der Förderung eines Fluids durch die Fluidleitung. Der Kühlkreislauf umfasst weiter die beschriebene Ventilanordnung. Die Ventilanordnung ist so angeordnet, dass eine Hochdruckseite der Pumpe mit dem Zulauf und eine Niederdruckseite der Pumpe mit dem Ablauf strömungstechnisch verbunden ist. Die Ventilanordnung wird also bei einem Betrieb der Pumpe ausgehend von dem Zulauf und hin zum Ablauf entlang einer Strömungsrichtung von dem Fluid durchströmt.

Der über den Zulauf in die Ventilanordnung einströmende Volumenstrom kann, wenn das Rückschlagventil nicht in der zweiten (verschlossenen) Stellung vorliegt, entlang eines ersten Teilvolumenstroms über das Drosselventil und entlang eines zweiten Teilvolumenstroms über das Rückschlagventil hin zum Ablauf strömen. Stromabwärts des Drosselventils und des Rückschlagventils und stromaufwärts des Ablaufs werden die Teilvolumenströme wieder zusammengeführt.

Die Ventilanordnung ermöglicht insbesondere, dass, sobald eine Druckdifferenz zwischen Zulauf und Ablauf vorliegt, immer ein Volumenstrom über das Drosselventil (also entlang des ersten Strömungswegs strömt. Weiter ermöglich die Ventilanordnung, dass, wenn die Druckdifferenz einen dritten Grenzwert überschreitet, ein über das Rückschlagventil strömender Volumenstrom (der zweite Teilvolumenstrom) ein Minimum erreicht oder auf null reduziert wird.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine Ventilanordnung;
- Fig. 2:: ein Diagramm mit einer Kennlinie und unterschiedlichen Zuständen der Ventilanordnung;
- Fig. 3:: eine erste Ausführungsvariante einer Ventilanordnung;
- Fig. 4:: eine zweite Ausführungsvariante einer Ventilanordnung;
- Fig. 5:: eine dritte Ausführungsvariante einer Ventilanordnung; und
- Fig. 6:: eine vierte Ausführungsvariante einer Ventilanordnung.

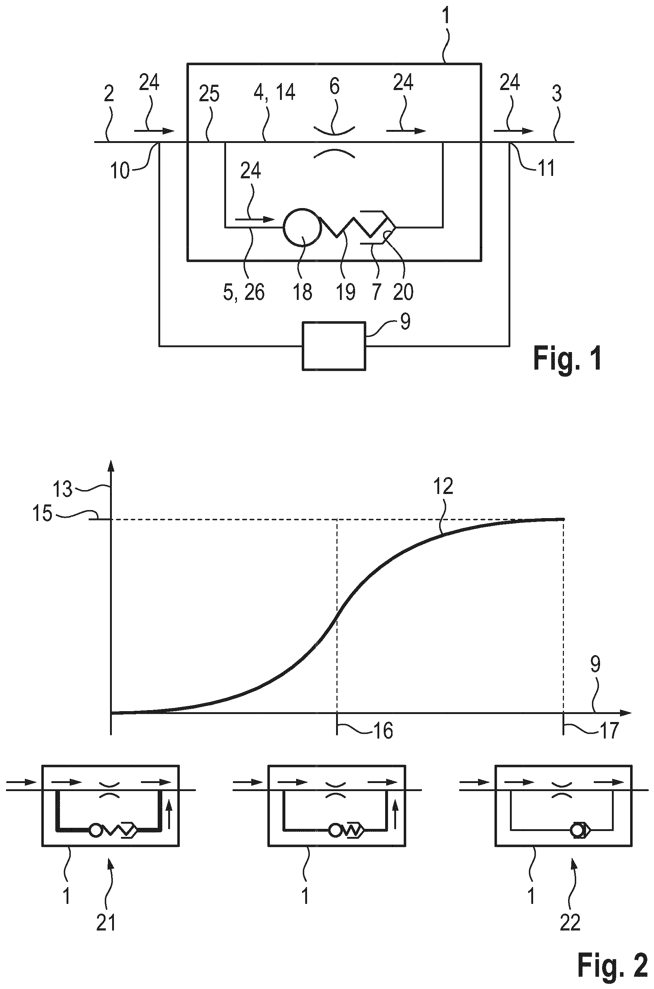

Fig. 1 zeigt eine Ventilanordnung 1. Fig. 2 zeigt ein Diagramm mit einer Kennlinie 12 und unterschiedlichen Zuständen der Ventilanordnung 1. Die Figuren werden im Folgenden gemeinsam beschrieben.

An der vertikalen Achse ist der Volumenstrom in Litern pro Minute aufgetragen. An der horizontalen Achse ist die Druckdifferenz 9 zwischen einem ersten Druck 10 im Zulauf 2 und einem zweiten Druck 11 im Ablauf 3 in Bar aufgetragen. Unterhalb des Diagramms sind drei unterschiedliche Zustände der Ventilanordnung 1 dargestellt, bei dem sich der Volumenstrom 13 in unterschiedlicher Weise in Teilvolumenströme 14, 26 aufteilt.

Die Ventilanordnung 1 umfasst einen Zulauf 2 und einen Ablauf 3, einen den Zulauf 2 mit dem Ablauf 3 strömungstechnisch verbindenden ersten Strömungsweg 4 sowie einen den Zulauf 2 mit dem Ablauf 3 strömungstechnisch verbindenden zweiten Strömungsweg 5. In dem ersten Strömungsweg 4 ist ein Drosselventil 6 und in dem zweiten Strömungsweg 5 ein Rückschlagventil 7 angeordnet. Ein Durchströmungsquerschnitt 8 des Rückschlagventils 7 verringert sich bei steigender Druckdifferenz 9 zwischen einem ersten Druck 10 im Zulauf 2 und einem zweiten Druck 11 im Ablauf 3.

Ein über die Ventilanordnung 1 strömendes Fluid 25 strömt über den Zulauf 2 in die Ventilanordnung 1 ein und über den Ablauf 3 wieder ab. Der in die Ventilanordnung 1 über den Zulauf 2 einströmende Volumenstrom 13 entspricht dabei dem über den Ablauf 3 aus der Ventilanordnung 1 ausströmenden Volumenstrom 13.

Die Ventilanordnung 1 weist genau zwei Strömungswege 4, 5 auf. Die Strömungswege 4, 5 sind parallel zueinander verschaltet, so dass entlang des ersten Strömungswegs 4 ein erster Teilvolumenstrom 14 und entlang des zweiten Strömungswegs 5 ein zweiter Teilvolumenstrom 26 hin zum Ablauf 3 strömen kann.

In dem ersten Strömungsweg 4 ist ein Drosselventil 6 angeordnet, dass in bekannter Weise ausgeführt ist und eine linear oder degressiv verlaufende Kennlinie 12 aufweist, bei der ein Volumenstrom 13 mit steigender Druckdifferenz 9 proportional oder degressiv ansteigt. Das Drosselventil 6 ist ungeregelt, weist also einen konstanten Durchströmungsquerschnitt auf.

In dem zweiten Strömungsweg 5 ist ein Rückschlagventil 7 angeordnet. Das Rückschlagventil 7 ist derart ausgeführt, dass ein Durchströmungsquerschnitt 8 des Rückschlagventils 7 sich bei steigender Druckdifferenz 9 verringert.

Eine Kennlinie 12 eines Volumenstroms 13, der durch die Ventilanordnung 1 hindurch strömt, ist in Abhängigkeit von der Druckdifferenz 9 bei kleineren Volumenströmen 13 progressiv und bei größeren Volumenströmen 13 degressiv. Das bedeutet, dass ausgehend von einer Druckdifferenz 9 von null der durch die Ventilanordnung 1 strömende Volumenstrom 13 zunächst überproportional ansteigt. Bei höheren Druckdifferenzen 9 ist die Kennlinie 12 dann degressiv, wobei der Volumenstrom 13 dann nur noch unterproportional ansteigt. Zwischen dem progressiven und dem degressiven Verlauf der Kennlinie 12 verläuft diese annährend linear.

Der Volumenstrom 13 steigt mit steigender Druckdifferenz 9 immer weiter an. Dabei erreicht der Volumenstrom 13 bei einer bestimmten Druckdifferenz 9 ein Maximum (erster Grenzwert 15) und bleibt dann im Wesentlichen konstant.

Die Ventilanordnung 1 ist ungeregelt, so dass sich der Volumenstrom 13 durch die Ventilanordnung 1 bei ansonsten konstanten Umgebungsbedingungen ausschließlich in Abhängigkeit von der Druckdifferenz 9 einstellt bzw. selbsttätig regelt. Es erfolgt keine von außerhalb der Ventilanordnung 1 aktuierte Änderung eines Durchströmungsquerschnitts 8 der Ventile 6, 7. Der Durchströmungsquerschnitt 8 am Rückschlagventil 7 regelt sich selbsttätig.

Der Durchströmungsquerschnitt 8 des Rückschlagventils 7 weist ausgehend von einer geringen Druckdifferenz 9 und bis hin zu einem zweiten Grenzwert 16 der Druckdifferenz 9 einen maximalen Wert (siehe linke Darstellung der Ventilanordnung 1 unterhalb des Diagramms, die sich dann in der ersten Stellung 21 befindet) und ab einem dritten Grenzwert 17 und hin zu größeren Druckdifferenzen 9 einen minimalen Wert (siehe rechte Darstellung der Ventilanordnung 1 unterhalb des Diagramms, die sich dann in der zweiten Stellung 22 befindet) auf. Insbesondere verringert sich also der Durchströmungsquerschnitt 8 des Rückschlagventils 7 mit steigender Druckdifferenz 9. In der mittleren Darstellung der Ventilanordnung 1 unterhalb des Diagramms ist der Zustand dargestellt, der sich bei einer Druckdifferenz 9 einstellt, die zwischen dem zweiten Grenzwert 16 und dem dritten Grenzwert 17 liegt.

Der Durchströmungsquerschnitt 8 ist bei dem minimalen Wert vollständig verschlossen, so dass dann ein zweiter Teilvolumenstrom 26 auf null abfällt.

Das Rückschlagventil 7 weist ein Verschlusselement 18 auf, das mit zunehmender Druckdifferenz 9 gegen eine Federkraft mindestens eines Federelements 19 hin zu einem Ventilsitz 20 des Rückschlagventils 7 verlagerbar ist.

In einer Ausgangsstellung (erste Stellung 21, linke Darstellung der Ventilanordnung 1 unterhalb des Diagramms), wenn also keine Druckdifferenz 9 zwischen dem Zulauf 2 und dem Ablauf 3 vorliegt, ist das Verschlusselement 18 beabstandet von dem Ventilsitz 20 angeordnet, so dass ein (maximaler) Durchströmungsquerschnitt 8 am Rückschlagventil 7 vorliegt.

Mit zunehmender Druckdifferenz 9 wird das Verschlusselement 18 sukzessive hin zum Ventilsitz 20 verlagert, so dass der Durchströmungsquerschnitt 8 zunehmend verringert wird.

Die Ventilanordnung 1 ist in einem Kühlkreislauf so angeordnet, dass eine Hochdruckseite einer Pumpe mit dem Zulauf 2 und eine Niederdruckseite der Pumpe mit dem Ablauf 3 strömungstechnisch verbunden ist. Die Ventilanordnung 1 wird also bei einem Betrieb der Pumpe ausgehend von dem Zulauf 2 und hin zum Ablauf 3 entlang einer Strömungsrichtung 24 von dem Fluid 25 durchströmt.

Der über den Zulauf 2 in die Ventilanordnung 1 einströmende Volumenstrom 13 kann, wenn das Rückschlagventil 7 nicht in der zweiten (verschlossenen) Stellung 22 vorliegt, entlang eines ersten Teilvolumenstroms 14 über das Drosselventil 6 und entlang eines zweiten Teilvolumenstroms 26 über das Rückschlagventil 7 hin zum Ablauf 3 strömen. Stromabwärts des Drosselventils 6 und des Rückschlagventils 7 und stromaufwärts des Ablaufs 3 werden die Teilvolumenströme 14, 26 wieder zusammengeführt.

Die Ventilanordnung 1 ermöglicht, dass, sobald eine Druckdifferenz 9 zwischen Zulauf 2 und Ablauf 3 vorliegt, immer ein Volumenstrom 13 über das Drosselventil 6 (also entlang des ersten Strömungswegs 4) strömt. Weiter ermöglicht die Ventilanordnung 1, dass, wenn die Druckdifferenz 9 einen dritten Grenzwert 17 überschreitet, ein über das Rückschlagventil 7 strömender Volumenstrom 13 (der zweite Teilvolumenstrom 26) ein Minimum erreicht oder auf null reduziert wird.

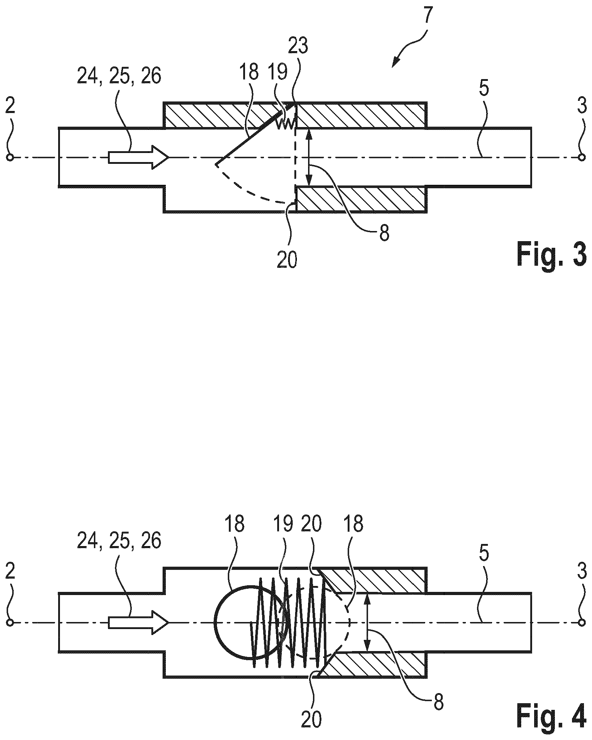

Fig. 3 zeigt eine erste Ausführungsvariante einer Ventilanordnung 1. Auf die Ausführungen zu den Fig. 1 und 2 wird verwiesen.

Das Verschlusselement 18 ist eine Klappe, die zwischen einer ersten Stellung 21, in der der Durchströmungsquerschnitt 8 einen maximalen Wert aufweist, und einer zweiten Stellung 22, in der der Durchströmungsquerschnitt 8 einen minimalen Wert aufweist, um einen Drehpunkt 23 verdrehbar ist.

Fig. 4 zeigt eine zweite Ausführungsvariante einer Ventilanordnung 1. Auf die Ausführungen zu den Fig. 1 bis 3 wird verwiesen.

Das Verschlusselement 18 ist als eine Kugel ausgeführt, die zwischen einer ersten Stellung 21, in der der Durchströmungsquerschnitt 8 einen maximalen Wert aufweist, und einer zweiten Stellung, in der der Durchströmungsquerschnitt 8 einen minimalen Wert aufweist, entlang einer Strömungsrichtung 24 eines die Ventilanordnung 1 durchströmenden Fluids 25 (also transversal) verlagerbar ist.

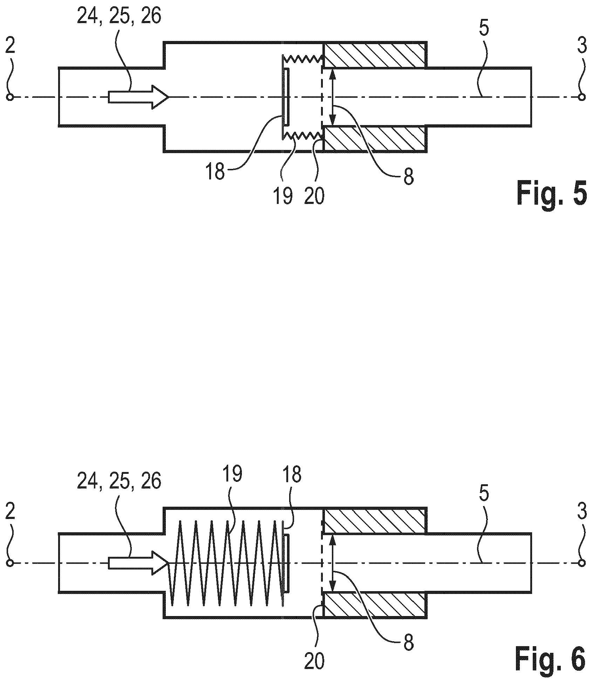

Fig. 5 zeigt eine dritte Ausführungsvariante einer Ventilanordnung 1. Auf die Ausführungen zu Fig. 4 wird verwiesen.

Hier ist das Verschlusselement 18 als eine transversal verlagerbare Klappe ausgeführt, wobei das Federelement 19 als eine Druckfeder ausgeführt ist, die bei steigender Druckdifferenz 8 gegen eine Federkraft zunehmend zusammengedrückt wird.

Fig. 6 zeigt eine dritte Ausführungsvariante einer Ventilanordnung 1. Auf die Ausführungen zu Fig. 4 und 5 wird verwiesen.

Hier ist das Verschlusselement 18 als eine transversal verlagerbare Klappe ausgeführt, wobei das Federelement 19 als eine Zugfeder ausgeführt ist, die bei steigender Druckdifferenz 8 gegen eine Federkraft zunehmend auseinandergezogen wird.

### Bezugszeichenliste

- 1: Ventilanordnung
- 2: Zulauf
- 3: Ablauf
- 4: erster Strömungsweg
- 5: zweiter Strömungsweg
- 6: Drosselventil
- 7: Rückschlagventil
- 8: Durchströmungsquerschnitt
- 9: Druckdifferenz
- 10: erster Druck
- 11: zweiter Druck
- 12: Kennlinie
- 13: Volumenstrom
- 14: erster Teilvolumenstrom
- 15: erster Grenzwert
- 16: zweiter Grenzwert
- 17: dritter Grenzwert
- 18: Verschlusselement
- 19: Federelement
- 20: Ventilsitz
- 21: erste Stellung
- 22: zweite Stellung
- 23: Drehpunkt
- 24: Strömungsrichtung
- 25: Fluid
- 26: zweiter Teilvolumenstrom

## Patentansprüche

1. Ventilanordnung (1), zumindest umfassend einen Zulauf (2) und einen Ablauf (3), einen den Zulauf (2) mit dem Ablauf (3) strömungstechnisch verbindenden ersten Strömungsweg (4) sowie einen den Zulauf (2) mit dem Ablauf (3) strömungstechnisch verbindenden zweiten Strömungsweg (5), wobei in dem ersten Strömungsweg (4) ein Drosselventil (6) und in dem zweiten Strömungsweg (5) ein Rückschlagventil (7) angeordnet ist, **dadurch gekennzeichnet, dass** sich ein Durchströmungsquerschnitt (8) des Rückschlagventils (7) bei steigender Druckdifferenz (9) zwischen einem ersten Druck (10) im Zulauf (2) und einem zweiten Druck (11) im Ablauf (3) verringert.

2. Ventilanordnung (1) nach Patentanspruch 1, wobei eine Kennlinie (12) eines Volumenstroms (13) durch die Ventilanordnung (1) in Abhängigkeit von der Druckdifferenz (9) bei kleineren Volumenströmen (13) progressiv und bei größeren Volumenströmen (13) degressiv ist.

3. Ventilanordnung (1) nach einem der vorhergehenden Patentansprüche, wobei die Ventilanordnung (1) ungeregelt ist, so dass sich der Volumenstrom (13) durch die Ventilanordnung (1) ausschließlich in Abhängigkeit von der Druckdifferenz (9) einstellt.

4. Ventilanordnung (1) nach einem der vorhergehenden Patentansprüche, wobei das Drosselventil (6) als eine Blende ausgeführt ist, bei der sich ein über den ersten Strömungsweg (4) strömender erster Teilvolumenstrom (14) bei steigender Druckdifferenz (9) einem ersten Grenzwert (15) annähert.

5. Ventilanordnung (1) nach einem der vorhergehenden Patentansprüche, wobei der Durchströmungsquerschnitt (8) ausgehend von einer geringen Druckdifferenz (9) und bis hin zu einem zweiten Grenzwert (16) der Druckdifferenz (9) einen maximalen Wert und ab einem dritten Grenzwert (17) und hin zu größeren Druckdifferenzen (9) einen minimalen Wert aufweist.

6. Ventilanordnung (1) nach Patentanspruch 5, wobei der Durchströmungsquerschnitt (8) bei dem minimalen Wert vollständig verschlossen ist.

7. Ventilanordnung (1) nach einem der vorhergehenden Patentansprüche, wobei das Rückschlagventil (7) ein Verschlusselement (18) aufweist, dass mit zunehmender Druckdifferenz (9) gegen eine Federkraft mindestens eines Federelements (19) hin zum einem Ventilsitz (20) des Rückschlagventils (7) verlagerbar ist.

8. Ventilanordnung (1) nach Patentanspruch 7, wobei das Verschlusselement (18) eine Klappe ist, die zwischen einer ersten Stellung (21), in der der Durchströmungsquerschnitt (8) einen maximalen Wert aufweist, und einer zweiten Stellung (22), in der der Durchströmungsquerschnitt (8) einen minimalen Wert aufweist, um einen Drehpunkt (23) verdrehbar ist.

9. Ventilanordnung (1) nach Patentanspruch 7, wobei das Verschlusselement (18) ein Element ist, das zwischen einer ersten Stellung (21), in der der Durchströmungsquerschnitt (8) einen maximalen Wert aufweist, und einer zweiten Stellung (22), in der der Durchströmungsquerschnitt (8) einen minimalen Wert aufweist, entlang einer Strömungsrichtung (24) eines die Ventilanordnung (1) durchströmenden Fluids (25) verlagerbar ist.

10. Ventilanordnung (1) einem der vorhergehenden Patentansprüche 7 bis 9, wobei das Federelement (19) eine Zugfeder oder eine Druckfeder ist, die als eine Spiralfeder oder als eine Torsionsfeder ausgeführt ist.

## Claims

1. Valve arrangement (1), at least comprising an inlet (2) and an outlet (3), a first flow path (4) fluidically connecting the inlet (2) to the outlet (3) and a second flow path (5) fluidically connecting the inlet (2) to the outlet (3), a throttle valve (6) being arranged in the first flow path (4) and a check valve (7) being arranged in the second flow path (5), **characterized in that** a flow cross-section (8) of the check valve (7) decreases as the pressure difference (9) increases between a first pressure (10) in the inlet (2) and a second pressure (11) in the outlet (3).

2. Valve arrangement (1) according to claim 1, wherein a characteristic curve (12) of a volume flow (13) through the valve arrangement (1) is progressive for smaller volume flows (13) and degressive for larger volume flows (13), depending on the pressure difference (9).

3. Valve arrangement (1) according to any of the preceding claims, wherein the valve arrangement (1) is unregulated, so that the volume flow (13) through the valve arrangement (1) is adjusted exclusively depending on the pressure difference (9).

4. Valve arrangement (1) according to any of the preceding claims, wherein the throttle valve (6) is designed as an orifice in which a first partial volume flow (14) flowing via the first flow path (4) approaches a first limit value (15) as the pressure difference (9) increases.

5. Valve arrangement (1) according to any of the preceding claims, wherein the flow cross-section (8) has a maximum value starting from a small pressure difference (9) and up to a second limit value (16) of the pressure difference (9), and a minimum value from a third limit value (17) and up to larger pressure differences (9).

6. Valve arrangement (1) according to claim 5, wherein the flow cross-section (8) is completely closed when at the minimum value.

7. Valve arrangement (1) according to any of the preceding claims, wherein the check valve (7) has a closure element (18) which can be displaced, as the pressure difference (9) increases, against a spring force of at least one spring element (19) towards a valve seat (20) of the check valve (7).

8. Valve arrangement (1) according to claim 7, wherein the closure element (18) is a flap which is rotatable about a pivot point (23), between a first position (21), in which the flow cross-section (8) has a maximum value, and a second position (22), in which the flow cross-section (8) has a minimum value.

9. Valve arrangement (1) according to claim 7, wherein the closure element (18) is an element which is displaceable between a first position (21), in which the flow cross-section (8) has a maximum value, and a second position (22), in which the flow cross-section (8) has a minimum value, along a flow direction (24) of a fluid (25) flowing through the valve arrangement (1).

10. Valve arrangement (1) according to any of the preceding claims 7 to 9, wherein the spring element (19) is a tension spring or a compression spring which is in the form of a spiral spring or a torsion spring.

## Revendications

1. Agencement de soupapes (1), comprenant au moins une entrée (2) et une sortie (3), une première voie d'écoulement (4) reliant l'entrée (2) à la sortie (3) par écoulement ainsi qu'une seconde voie d'écoulement (5) reliant l'entrée (2) à la sortie (3) par écoulement, dans lequel une soupape d'étranglement (6) est disposée dans la première voie d'écoulement (4) et une soupape antiretour (7) est disposée dans la seconde voie d'écoulement (5), **caractérisé en ce qu'**une section transversale d'écoulement (8) de la soupape antiretour (7) diminue lorsque la différence de pression (9) entre une première pression (10) dans l'entrée (2) et une seconde pression (11) dans la sortie (3) augmente.

2. Agencement de soupapes (1) selon la revendication 1, dans lequel une courbe caractéristique (12) d'un débit volumique (13) à travers l'agencement de soupapes (1) en fonction de la différence de pression (9) est progressive pour des débits volumiques (13) plus faibles et dégressive pour des débits volumiques (13) plus importants.

3. Agencement de soupapes (1) selon l'une des revendications précédentes, dans lequel l'agencement de soupapes (1) n'est pas régulé, de sorte que le débit volumique (13) à travers l'agencement de soupapes (1) se règle exclusivement en fonction de la différence de pression (9).

4. Agencement de soupapes (1) selon l'une des revendications précédentes, dans lequel la soupape d'étranglement (6) est réalisée sous la forme d'un diaphragme avec lequel un premier débit volumique partiel (14) s'écoulant sur la première voie d'écoulement (4) se rapproche d'une première valeur limite (15) lorsque la différence de pression (9) augmente.

5. Agencement de soupapes (1) selon l'une des revendications précédentes, dans lequel la section transversale d'écoulement (8) présente une valeur maximale en partant d'une faible différence de pression (9) et jusqu'à une deuxième valeur limite (16) de la différence de pression (9) et une valeur minimale en partant d'une troisième valeur limite (17) et jusqu'à des différences de pression (9) plus importantes.

6. Agencement de soupapes (1) selon la revendication 5, dans lequel la section transversale d'écoulement (8) est complètement fermée à la valeur minimale.

7. Agencement de soupapes (1) selon l'une des revendications précédentes, dans lequel la soupape antiretour (7) présente un élément de fermeture (18) qui peut être déplacé avec une différence de pression (9) croissante à l'encontre d'une force de ressort d'au moins un élément formant ressort (19) vers un siège de soupape (20) de la soupape antiretour (7).

8. Agencement de soupapes (1) selon la revendication 7, dans lequel l'élément de fermeture (18) est un clapet qui peut tourner autour d'un point de rotation (23) entre une première position (21), dans laquelle la section transversale d'écoulement (8) présente une valeur maximale, et une seconde position (22), dans laquelle la section transversale d'écoulement (8) présente une valeur minimale.

9. Agencement de soupapes (1) selon la revendication 7, dans lequel l'élément de fermeture (18) est un élément qui peut être déplacé le long d'une direction d'écoulement (24) d'un fluide (25) s'écoulant à travers l'agencement de soupapes (1) entre une première position (21), dans laquelle la section transversale d'écoulement (8) présente une valeur maximale, et une seconde position (22), dans laquelle la section transversale d'écoulement (8) présente une valeur minimale.

10. Agencement de soupapes (1) selon l'une des revendications 7 à 9 précédentes, dans lequel l'élément formant ressort (19) est un ressort de traction ou un ressort de compression qui est réalisé sous la forme d'un ressort en spirale ou d'un ressort de torsion.
